# EUROPEAN PATENT SPECIFICATION

(11) **EP 4 476 392 B1**
(45) Date of publication and mention of the grant of the patent: **10.06.2026**
(21) Application number: 22926296.9
(22) Date of filing: 09.12.2022
(51) Int. Cl.: B65H 75/26, B65H 81/08, B29C 53/28, B29C 53/60, B29C 53/64, B32B 1/08, B32B 3/26, B32B 3/30, B32B 7/12, B32B 29/00, B32B 29/08, B29C 53/58

(54) **EMBOSSMENT PROTECTIVE FEATURE FOR CORE TUBES**
GEPRÄGTES SCHUTZMERKMAL FÜR KERNROHRE
ÉLÉMENT DE PROTECTION DE BOSSAGE POUR TUBES CENTRAUX

(30) Priority: 10.02.2022 US 202217669098
(43) Date of publication of application: 18.12.2024
(73) Proprietor: Sonoco Development, Inc., Hartsville, SC 29550 (US)
(72) Inventor: DAVIS, Neil, Roland, Asheboro, NC 27205 (US); ROSZ, Justin, Liberty Township, OH 45011 (US); WHITE, Colin, Hartsville, SC 29550 (US); LANE, Gerald, Lee, Hartsville, SC 29550 (US); HARKER, Thomas, S., Lynchburg, SC 29080 (US)
(74) Representative: Reinhardt, Markus
(86) International application number: PCT/US2022/052360
(87) International publication number: WO 2023/154104

(56) References cited:
- EP-A2- 1 419 985
- US-A- 1 385 952
- US-A1- 2003 080 233
- US-A1- 2004 213 976
- US-A1- 2011 236 614
- US-B1- 6 309 721
- US-B2- 7 223 464
- US-B2- 7 527 586
- US-B2- 9 505 179
- US-B2- 9 809 908

## Description

### Technical Field

The present disclosure relates generally to core tubes and, more particularly, to protective features for embossments in outer surfaces of core tubes.

### Background

Cylindrical tubes or cores (collectively referred to herein as "tubes") are configured for use as a support structure about which a long continuous web of fabric can be wound into a roll. An ordinary paperboard tube has an outer surface that is relatively smooth. For many fabrics, friction between the outer surface and the wound fabric is sufficient to prevent slippage of the fabric along the tube. A challenge can exist in winding such a fabric, such as a nonwoven fabric or the like, about a tube where there is insufficient friction as the fabric is starting to wind about the tube, and the fabric tends to slip relative to the tube as the tube is rotated , by the winding equipment. Slippage can also occur during unwinding of the fabric from the tube. Accordingly, tubes may be provided with additional gripping features that increase the adherence of the fabric to the tube outer surface.

Some winding tubes for nonwoven fabrics have embossments on the tube outer surface to grip the fabric. The outer surface layer of these tubes may be formed from an embossed paperboard strip that is helically wound around the exterior of the tube. The embossments are designed to help prevent the fabric from slipping relative to the tube in the longitudinal and circumferential directions. Another type of tube used for nonwoven fabrics has an outer surface layer formed from a helically wound paperboard strip that has a multitude of perforations formed in such a manner that each perforation is surrounded by a small generally conical or "volcano-shaped" region of the outer surface layer that projects radially outwardly such that the outer surface layer defines a prickly surface designed to grab the web of fabric.

Once the paperboard strip is wound around the tube to form the outer surface layer, the embossing or perforation height above the tube outer surface can be diminished as the outer surface layer of the tube comes into contact with supports or rollers that are downstream in the fabrication process from the application of the paper strip. For example, the tube may rest on a V-trough as it moves through the process or be engaged when sections are cut to length from the tube. The diminished height of the embossed or perforated pattern smooths the outer surface layer of the tube and can reduce the effectiveness of the embossments and perforations in engaging the fabric and preventing slippage as the web of fabric is being wound around the tube.

US 7 527 586 B2 discloses a winding core for nonwoven fabrics and the like, according to the preamble of claims 1, 8 and 15, comprising a wound paperboard tube comprising a plurality of paperboard layers wound one upon another about an axis of the tube and adhered together, and regions of grit bound in an adhesive binder, the regions being affixed to the outer surface of the tube and being sized and arranged such that the regions collectively occupy a minority of the total surface area of the outer surface, the regions further being arranged such that there are at least two of the regions axially spaced apart along a length of the tube in positions to simultaneously encounter and snag an end of a fabric web to be wound about the core. In one embodiment, a narrow sandpaper strip is helically wound about and affixed to the tube to form the regions of grit.

US 2003/080233 A1 discloses a roll product consisting of a band-shaped web of material having a first end, a second end and a hollow cylindrical core onto which the band-shaped web of material is wound. The hollow cylindrical core has a longitudinal direction and a radial direction. The hollow cylindrical core comprises an inner surface, an outer surface, and at least one protuberance protruding outwardly from the outer surface, principally in the radial direction of the hollow cylindrical core, for mechanically and releasably engaging and holding the first end of the band-shaped web of material. The protuberance is an integral part of the hollow cylindrical core and comprises the inner surface and the outer surface of the hollow cylindrical core.

### Summary of the Disclosure

In one aspect of the present invention, a tube for winding a web of fabric or similar material thereon is disclosed in claim 1. The tube includes an inner tube comprising a plurality of inner layers that are wound one upon another about a longitudinal axis of the inner tube and adhered together, the inner tube having a cylindrical inner tube outer surface, an outermost layer formed by a strip of material that is helically wound around the inner tube outer surface, wherein the outermost layer has a tube outer surface and a plurality of raised gripping portions extending radially outward from the tube outer surface by a raised gripping portion distance, and a raised protective strip formed at the outermost layer and wrapping around the outermost layer such that at least a portion of the plurality of raised gripping portions are uncovered and exposed to an exterior of the tube. The raised protective strip extends radially outward from the tube outer surface by a protective strip distance.

In another aspect of the present invention, a tube for winding a web of fabric or other material thereon is disclosed in claim 8. The tube includes an inner tube comprising a plurality of inner layers that are wound one upon another about a longitudinal axis of the inner tube and adhered together, the inner tube having a cylindrical inner tube outer surface, and an outermost layer formed by a strip of material that is helically wound around the inner tube outer surface. The outermost layer has a tube outer surface and a plurality of raised gripping portions extending radially outward from the tube outer surface by a raised gripping portion distance, and an overlap seam is formed by one of the plurality of inner layers or the outermost layer with a first edge of the one of the plurality of inner layers or the outermost layer being applied to an underlying layer and a second edge of the one of the plurality of inner layers or the outermost layer being applied to the one of the plurality of inner layers or the outermost layer over the first edge and overlapping the first edge. The tube further includes a raised protective strip formed in a portion of the outermost layer that overlies the overlap seam. The raised protective strip extends radially outward from the tube outer surface by a protective strip distance.

In a further aspect of the present invention, a method for forming a tube for winding a web of fabric or similar material thereon is disclosed in claim 15. The method includes forming an inner tube having a plurality of inner layers that are wound one upon another about a longitudinal axis of the inner tube and adhered together, the inner tube having a cylindrical inner tube outer surface, forming an outermost layer from a strip of material that is helically wound around the inner tube outer surface, wherein the outermost layer has a tube outer surface and a plurality of raised gripping portions extending radially outward from the tube outer surface by a raised gripping portion distance, and forming a raised protective strip at the outermost layer that helically wraps around the outermost layer such that at least a portion of the plurality of raised gripping portions are uncovered and exposed to an exterior of the tube. The raised protective strip extends radially outward from the tube outer surface by a protective strip distance.

Additional aspects of the invention are defined by the dependent claims of this patent.

### Brief Description of the Drawings

Fig. 1 is an isometric view of a tube with a protective strip in accordance with the present disclosure;
Fig. 2 is a side view of the tube of Fig. 1;
Fig. 3 is a cross-sectional view of a portion of the tube taken along line 3-3 and illustrating an embodiment of the protective strip;
Fig. 4 is the cross-sectional view of Fig. 3 illustrating an alternative embodiment of the protective strip;
Fig. 5 is the cross-sectional view of Fig. 3 illustrating the protective strip embodiment of Fig. 4 with the tube having raised gripping portions formed by perforations;
Fig. 6 is the cross-sectional view of Fig. 3 illustrating a further embodiment of the protective strip;
Fig. 7 is a diagrammatic illustration of an apparatus and process for fabricating the tube of Fig. 1 with the protective strip of Fig. 3; and
Fig. 8 is a diagrammatic illustration of an apparatus and process for fabricating the tube of Fig. 1 with the protective strip of Figs. 4 and 5.

### Detailed Description

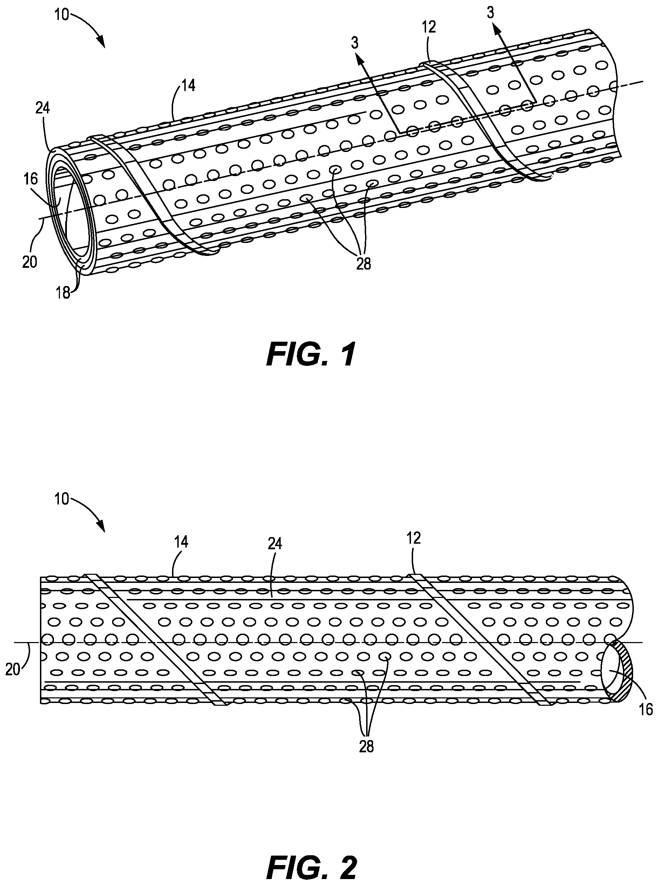

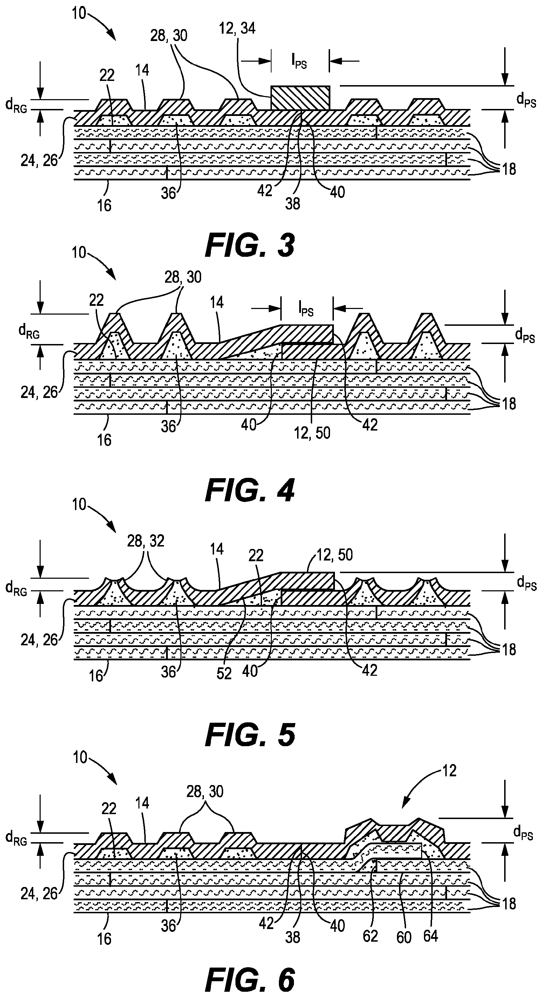

Figs. 1 and 2 illustrate a tube 10 having a protective strip 12 in accordance with the present disclosure projecting radially from a tube outer surface 14. The tube 10 is configured for use as a support structure about which a long continuous web of fabric, such as a nonwoven fabric or the like, is wound into a roll. The tube 10 comprises an inner tube 16 formed from a plurality of inner layers 18 or paperboard or other appropriate material wound one upon another about a longitudinal axis 20 of the inner tube 16 and adhered together by a suitable adhesive. The inner tube 16 can be a spirally or helically wound tube or a convolutely wound tube, or even a tube formed by a linear draw process. The inner tube 16 has a generally cylindrical inner tube outer surface 22 (Figs. 3-6). The inside diameter, wall thickness and length of the inner tube 16 can vary depending on the intended application and the requirements of the particular user. Typically, the inside diameter can range from about 1 inch (about 2.54 cm) to about 6 inches (about 15.24 cm), but can be up to approx. 23 inches (approx. 58.42 cm) in some applications. The wall thickness can range from approx. 0.100 inch (approx. 0.254 cm) to approx. 0.750 inch (approx. 1.905 cm), could be up to 1 inch (2.54 cm). The length can range from approx. 7 inches (approx. 17.8 cm) to approx. 250 inches (approx. 635 cm) or more, for example.

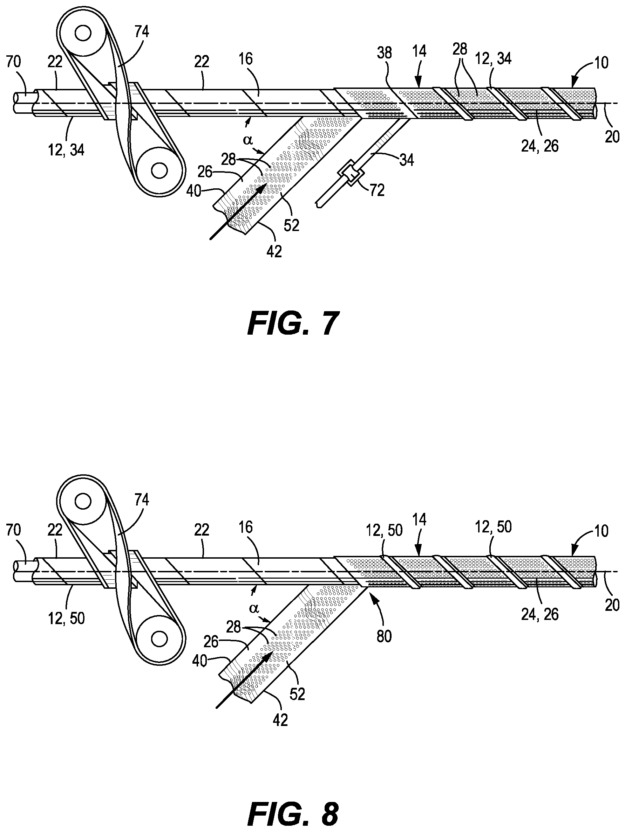

The tube 10 as illustrated further includes an outermost layer 24 formed by a strip 26 of paperboard or other appropriate material (Figs. 7 and 8) that is helically wound around the inner tube outer surface 22. The outermost layer 24 forms the tube outer surface 14 of the tube 10. A plurality of raised gripping portions 28 are formed in the strip 26 and extend radially outward from the tube outer surface 14 when the outermost layer 24 is applied to the inner tube 16. The raised gripping portions 28 can be formed in the strip 26 of paperboard material by any appropriate means to provide additional grip between the tube outer surface 14 and a web of fabric being wound thereon. In one implementation, the raised gripping portions 28 may be formed by embossing the strip 26 of material to form a pattern of embossments 30 (Figs. 3, 4 and 6) thereon. In another implementation, the raised gripping portions 28 may constitute a multitude of perforations 32 (Fig. 5) formed in such a manner that each perforation 32 has a generally conical region of the outermost layer 24 that projects radially above the tube outer surface 14 to define a prickly surface that grabs the web of fabric. Further alternative shapes and types of raised gripping portions 28 on the tube outer surface 14 that are capable of engaging the web of fabric to prevent slippage relative to the tube 10 may be implemented and are contemplated by the inventors. Depending on the paperboard material of the outermost layer 24 and the fabric to be wound onto the tube 10, the raised gripping portions 28, whether embossments, perforations or other structures, may extend above the tube outer surface 14 by a raised gripping portion distance d_{GP} within a range from 0.012 inches (0.305 mm) to 0.030 inches (0.762 mm).

In the embodiment of Figs. 1 and 2, the protective strip 12 is helically wound about the tube outer surface 14 and extends radially outward therefrom. The helical winding of the protective strip 12 provides open space between adjacent turns of the protective strip 12 so that a majority of the raised gripping portions 28 are exposed to the exterior of the tube 10 and available for contact to secure the web of fabric to the tube outer surface 14. While the protective strip 12 is illustrated and described herein as being helically wound around the tube outer surface 14, those skilled in the art will understand that protective strips 12 may be applied or produced on the tube outer surface 14 in alternative configurations. For example, protective strips 12 can be applied as a series of annular rings wrapped around the tube outer surface 14. In further alternatives, other types of protective features may be implemented that extend radially outward from the tube outer surface 14 and engage surfaces to prevent engagement and/or flattening of the raised gripping portions 28.

Figs. 3-6 provide cross-sectional views of various alternative embodiments for forming the protective strips 12 at the tube outer surface 14. Referring to Fig. 3, the protective strip 12 is formed by a thin strip 34 of paperboard or other appropriate material affixed to the tube outer surface 14 by adhesive or other means. The inner layers 18 form the inner tube 16. In this embodiment, the outermost layer 24 is helically wound around the inner tube 16 and affixed to the inner tube outer surface 22 by an adhesive 36. A seam 38 is formed between a first edge 40 and a second edge 42 of the strip 26 of material, with the strip 26 being applied to the inner tube 16 in surface-to-surface contact with the inner tube outer surface 22 from the first edge 40 to the second edge 42, and with the edges 40, 42 abutting or being slightly spaced apart to form a gap therebetween at the seam 38.

The raised gripping portions 28 are provided in the form of embossments 30 in the strip 26. The embossments 30 may extend radially outward from the tube outer surface 14 by a raised gripping portion distance d_{RG} that allows the embossments 30 to grab the web of fabric and substantially prevent longitudinal and circumferential movement of the fabric relative to the tube outer surface 14 as the web of fabric is wound onto and unwound from the tube 10. Voids created between the inner tube outer surface 22 and the outermost layer 24 by the embossments 30 may be partially or fully filled by the adhesive 36, but it may still be possible for the embossments 30 to be flattened when pressure is applied from the exterior of the tube 10.

The protective strip 12, 34 reduces engagement of the embossments 30 by providing a buffer between the embossments 30 and surfaces (not shown) that come in contact with the tube 10 during fabrication and before the web of fabric is wound onto the tube 10. The protective strip 12, 34 has a thickness so that the protective strip 12, 34 extends radially outward from the tube outer surface 14 by a protective strip distance d_{PS} that is greater than the raised gripping portion distance d_{RG} in the illustrated embodiment. When the tube 10 comes into contact with surfaces, the protective strip 12, 34 engages the surface and radially spaces the embossments 30 to prevent engagement and flattening of the embossments 30. The protective strip 12, 34 may have a longitudinal protective strip length l_{PS} that makes the protective strip 12, 34 sufficiently strong to support the tube 10 on the surface, but narrow enough to minimize any reduction in the number of embossments 30 formed on the outermost layer 24 to provide the necessary contact between the embossments 30 and the web of fabric to prevent slippage. In one embodiment, the strip 26 forming the outermost layer 24 may be approx. 5.0 inches (approx. 12.7 cm) wide, and the strip 34 of material forming the protective strip 12 may have a thickness equal to a protective strip distance d_{PS} within a range of approx. 0.012 inches (approx. 0.305 mm) to approx. 0.030 inches (approximately 0.762 mm), and a width equal to a longitudinal protective strip length l_{PS} of approx. 1.625 inches (approx. 4.127 cm). In this embodiment, the raised gripping portion distance d_{GP} may be less than or equal to the protective strip distance d_{PS} to avoid having the embossments 30 contacted and compressed by the surfaces. These values are exemplary, and those skilled in the art will understand that the dimensions used in a particular application will be determined by the requirements for tube 10 for that application.

In this embodiment, the protective strip 12, 34 is helically wound onto the tube outer surface 14 and affixed thereto by adhesive or other attachment means. The protective strip 12, 34 as shown overlays the seam 38 formed by the edges 40, 42. However, the protective strip 12, 34 may be applied to other longitudinal locations along the outermost layer 24 that do not overlay the seam 38. In other implementations, the protective strip 12, 34 may be helically wound around the tube outer surface 14 at different angle than the strip 26 of material forming the outermost layer 24 such that the protective strip 12, 34 traverses the seam 38 at intermittent locations along the tube 10. Application of such an out-of-angle protective strip 12, 34 to the tube outer surface 14 may occur downstream or out of line from the fabrication process of the tube 10 on a mandrel as illustrated and described below.

As further illustrated in Fig. 3, the embossments 30 are not formed proximate the edges 40, 42 of the strip 26 of material, and the protective strip 12, 34 does not cover any embossments 30 when applied to the core tube outer surface 14. In some embodiments, the protective strip 12, 34 may overlay some of the embossments 30 when applied to the tube outer surface 14. In either case, the embossments 30 and the protective strip 12, 34 are configured such that a relatively small amount of the embossed area is sacrificed to ensure that the remaining embossments 30 on the tube outer surface 14 are not compromised and remain capable of providing sufficient grip strength to prevent slippage of the web of fabric.

Fig. 4 illustrates an alternative embodiment of the tube 10 wherein the strip 34 of material is omitted, and the protective strip 12 is formed by an overlap seam 50 in the outermost layer 24. In this embodiment, the strip 26 of material forming the outermost layer 24 is widened so that the first edge 40 of the strip 26 in one turn around the inner tube 16 is overlapped by the second edge 42 of the strip 26 in the subsequent turn. The first edge 40 is applied to the inner tube outer surface 22, and the second edge 42 overlaps the first edge 40 and is applied to and affixed to the tube outer surface 14 over the first edge 40. The overlapped portion at the second edge 42 at the overlap seam 50 extends radially from the tube outer surface 14 by the protective strip distance d_{PS} that is approximately equal to a thickness of the strip 26 of material. Fig. 4 further illustrates that the raised gripping portion distance d_{RG} may be greater than the protective strip distance d_{PS} as discussed further below. The amount of overlap of the second edge 42 over the first edge 40 determines the longitudinal protective strip length l_{PS} of the protective strip 12 and the overlap seam 50. In one implementation, the strip 26 of material may have a width within a range from 5.50 inches (13.97 cm) to 5.5625 inches (14.13 cm) and a thickness within a range from 0.013 inches (0.330 mm) to 0.022 inches (0.559 mm), and result in a longitudinal protective strip length l_{PS} at the overlap seam 50 within a range from 0.225 inches (0.5715 cm) to 0.250 inches (0.635 cm). In other implementations, the strip 26 of material may have a width of approx. 7.5625 inches (approx. 19.21 cm) to provide the overlap to form the overlap seam 50. As with the other embodiments, the dimensions may vary and will be determined by the requirements for a particular application of the tube 10.

In this embodiment, the protective strip 12 may allow some level of contact of the raised gripping portions 28 by the surfaces because the raised gripping portion distance d_{RG} is greater than the protective strip distance d_{PS} so that the embossments 30 extend radially outward beyond the protective strip 12. Some compression of the embossments 30 and reduction of the raised gripping portion distance d_{RG} may occur. However, the protective strip 12 and the embossments 30 are dimensioned such that the protective strip 12 limits the compression and the embossments 30 maintain a residual raised gripping portion distance d_{RG} after contact is still sufficient for the embossments 30 to engage the fabric to prevent slippage. For example, in one testing scenario, the embossments 30 had an initial raised gripping portion distance d_{RG} equal to approx. 0.059 inches (1.500 mm), and the protective strip 12 formed by overlapping edges 40, 42 of an outermost layer 24 that was 0.020 inches (0.508 mm) had a protective strip distance d_{PS} equal to approx. 0.020 inches (0.508 mm). After engagement of the tube 10 by test surfaces, the embossments 30 had a residual raised gripping portion distance d_{RG} equal to approx. 0.038 inches (0.965 mm), which may be sufficient to provide the necessary grip to prevent slippage of the fabric. While only being illustrated in the embodiment of Fig. 4, those skilled in the art will understand that the raised gripping portion distance d_{RG} may be greater than the protective strip distance d_{PS} in any of the embodiments illustrated and described herein. For any given implementation, the type of raised gripping portion 28, protective strip 12, the relationship of the raised gripping portion distance d_{RG} as being greater than, equal to or less than the protective strip distance d_{PS} may be dictated by the particular characteristics of the implementation such as the fabric to be wound onto the tube 10, the materials from which the protective strip 12 and the outermost layer 24 are fabricated, and the like.

Referring to Fig. 5, the protective strip 12 is formed by the overlap seam in a similar manner as shown in Fig. 4 for a tube 10 wherein the raised gripping portions 28 of the outermost layer 24 comprise perforations 32 in the strip 26 of material. The strip 26 of material is perforated from an inner surface 52 through the strip 26 to the tube outer surface 14 to create the generally conical regions that extend outward from the tube outer surface 14 to the raised gripping portion distance d_{RG}. When the tube 10 is formed, the inner surface 52 faces and is affixed to the inner tube outer surface 22 so that the perforations 32 extend radially outward from the tube outer surface 14 as shown.

Fig. 6 illustrates a further alternative embodiment where an overlap seam 60 is formed in one of the inner layers 18 of the inner tube 16 to produce the protective strip 12 in the tube outer surface 14. Similar to the strip 26 as discussed above, a strip of paperboard material forming the inner layer 18 may be widened so that a first edge 62 is applied to the outer surface of the inner layer 18 and a second edge 64 overlaps the first edge 62 and projects radially outward relative to the first edge 62. When the strip 26 of material is applied to form the outermost layer 24, the portions overlying the overlap seam 60 will project radially outward and form the protective strip 12 relative to the tube outer surface 14. In an exemplary embodiment, a strip of material for the inner layer 18 with the overlap seam 60 may have a width of approx. 5.50 inches (approx. 13.97 cm) and a thickness of approx. 0.013 inches (approx. 0.330 mm) to form the overlap seam 60 and cause the protective strip 12 to project radially beyond the raised gripping portion distance d_{RG} of the raised gripping portions 28 to the protective strip distance d_{PS}. Other dimensions for the strip of material such as discussed above are also contemplated to form the overlap seam 60.

### Industrial Applicability

An apparatus and process for making the tube 10 of Figs. 1-3 is diagrammatically depicted in Fig. 7. In this example, the tube 10 is made by a spiral winding process that is well known in the art and thus the know portions will be described only briefly and more detail is provided for the components and processing steps related to the protective strips 12 in accordance with the present disclosure. The apparatus includes a cylindrical mandrel 70 typically made of steel or other suitably strong material. The mandrel 70 serves as the form about which the inner tube 16 is formed upstream from application of the outermost layer 24, 26 and the protective strip 12, 34. Thus, a plurality of inner layers 18 have been wound to form the inner tube 16 prior to application of the outermost layer 24, 26 to the inner tube outer surface 22 as shown. The apparatus includes a helical winding belt 74 that engages the inner tube outer surface 22 and advances the inner tube 16 along the mandrel 70 in screw fashion at a pitch corresponding to a winding angle α. In this manner, a continuous length of inner tube 16 is formed on the mandrel 70.

The strip 26 of material having the raised gripping portions 28 formed thereon is advanced toward the inner tube 16 and the mandrel 70 at a suitable winding angle α that is determined based on the diameter of the inner tube 16 and the width of the strip 26 so that the strip 26 will be wound about the inner tube 16 in a helical fashion to form the outermost layer 24 in such a way that the opposite edges 40, 42 of the successive helical turns of the strip 26 either abut or have a slight gap therebetween at the seam 38. It is usually desired to avoid having the edges 40, 42 overlap because an overlap region creates a bump that can adversely affect the attachment of the thin strip 34 to the tube outer surface 14. Where overlap of the edges 40, 42 may occur, the edges 40, 42 of the strip 26 may be skived to reduce the thickness of the strip 26 so that the thickness of the outermost layer 24 at the seam 38 is approximately the same as the thickness of the remainder of the strip 26 and the overlap does not form a bump. The strip 26 has the adhesive 36 applied to the inner surface 52 that faces the inner tube outer surface 22 by a suitable adhesive applicator (not shown) located between the supply roll (not shown) for the strip 26 and the inner tube 16.

In the illustrated embodiment, raised gripping portions 28 are not formed proximate the edges 40, 42 of the strip 26 so that the tube outer surface 14 proximate the seam 38 is relatively flat and without undulations created by the raised gripping portions 28 in the areas between adjacent turns of the seam 38. In alternate embodiments, however, the raised gripping portions 28 may be formed in the strip 26 out to the edges 40, 42, and the protective strip 12 may be applied over and affixed to areas having raised gripping portions 28. The process shown in Fig. 7 includes the provision of the protective strip 12, 34 that is narrower than the strip 26 for the outermost layer 24. The strip 12, 34 has adhesive applied to its back side by a suitable adhesive applicator 72, and the protective strip 12, 34 is then wound onto the tube outer surface 14 of the outermost layer 24 at the same winding angle α as the outermost layer 24. At a downstream cutting station (not shown), the tube 10 is cut into desired lengths. However, the protective strip 12 will engage support surfaces of the cutting station to prevent the raised gripping portions 28 from being engaged and flattened by the support surfaces.

Fig. 8 illustrates an alternative apparatus and process for making the tube 10 according to the embodiments shown in Figs. 4 and 5 where the overlap seam 50 in the outermost layer 24 forms the protective strip 12. In this apparatus and process, application of the thin strip 12, 34 from Figs. 3 and 7 is not necessary. Instead, the width of the strip 26 of material forming the outermost layer 24 and the winding angle α are adjusted so that the second edge 42 of a subsequent turn will overlap the first edge 40 of the preceding turn to form the overlap seam 50. An overlap area 80 between the edges 40, 42 forms at the point of application of the strip 26 of material so that the adhesive-covered inner surface 52 of the strip 26 proximate the second edge 42 faces and engages the tube outer surface 14 proximate the first edge 40 to form the overlap seam 50 as shown in Figs. 4 and 5. The embodiment of Fig. 6 may be formed by an apparatus and process that is a hybrid manner between the apparatus and processes of Figs. 7 and 8 wherein a strip forming the inner layer 18 beneath the outermost layer 24 has the overlap seam 60 formed at the edges 62, 64, the strip 26 of material is wound around the inner tube 16 in a manner to produce the seam 50, and the portion of the outermost layer 24 overlaying the overlap seam 60 will project radially outward to form the protective strip 12.

The tubes 10 incorporating protective strips 12 in accordance with the present disclosure better maintain the radial projection of the raised gripping portions 28 and better preserve the ability of the tube outer surface 14 to grab a web of material being wound thereon and prevent longitudinal and circumferential slippage of the material along the tube outer surface 14. The raised area provided by the protective strip 12 allows the tube 10 to rest on supports or other surfaces without applying pressure to the raised gripping portions 28 that tends to flatten the tube outer surface 14. This also minimizes the risk of having the adhesive 36 bleed through the outermost layer 24 and be transferred to the support surfaces. In this way, a small area of the raised gripping portions 28 may be sacrificed to provide better quality of embossments 30, perforations 32 or other raised gripping portions 28 on the remainder of the tube outer surface 14.

While the preceding text sets forth a detailed description of numerous different embodiments, it should be understood that the legal scope of protection is defined by the words of the claims set forth at the end of this patent. The detailed description is to be construed as exemplary only and does not describe every possible embodiment since describing every possible embodiment would be impractical, if not impossible. Numerous alternative embodiments could be implemented, using either current technology or technology developed after the filing date of this patent, which would still fall within the scope of the claims defining the scope of protection.

It should also be understood that, unless a term was expressly defined herein, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to herein in a manner consistent with a single meaning, that is done for sake of clarity only so as to not confuse the reader, and it is not intended that such claim term be limited, by implication or otherwise, to that single meaning.

## Claims

1. A tube (10) for winding a web of fabric or similar material thereon, comprising:
an inner tube (16) comprising a plurality of inner layers (18) that are wound one upon another about a longitudinal axis (20) of the inner tube (16) and adhered together, the inner tube (16) having a cylindrical inner tube outer surface (22);
an outermost layer (24) formed by a strip (26) of material that is helically wound around the inner tube outer surface (22), wherein the outermost layer (24) has a tube outer surface (14) and a plurality of raised gripping portions (28) extending radially outward from the tube outer surface (14) by a raised gripping portion distance (d_{GP}), **characterized by**
a raised protective strip (12) formed at the outermost layer (24) and wrapping around the outermost layer (24) such that at least a portion of the plurality of raised gripping portions (28) are uncovered and exposed to an exterior of the tube (10), and wherein the raised protective strip (12) extends radially outward from the tube outer surface (14) by a protective strip distance (d_{PS}).

2. The tube (10) according to claim 1, wherein the plurality of raised gripping portions (28) comprises a plurality of embossments (30) formed in the outermost layer (24).

3. The tube (10) according to claim 1, wherein the raised gripping portion distance (d_{GP}) is less than the protective strip distance (d_{PS}).

4. The tube (10) according to claim 1, wherein the raised protective strip (12) comprises a strip (34) of material that is helically wound around the outermost layer (24) and affixed to the tube outer surface (14).

5. The tube (10) according to claim 4, wherein the raised protective strip (12) is applied to an area of the tube outer surface (14) without covering any of the plurality of raised gripping portions (28).

6. The tube (10) according to claim 1, wherein the raised protective strip (12) comprises an overlap seam (50) of the outermost layer (24) where a first edge (40) of the outermost layer (24) is applied to the inner tube outer surface (22) and a second edge (42) of the outermost layer (24) is applied to the tube outer surface (14) over the first edge (40) and overlaps the first edge (40).

7. The tube (10) according to claim 1, wherein an overlap seam (60) is formed by one of the plurality of inner layers (18) of the inner tube (16) where a first edge (62) of the one of the plurality of inner layers (18) is applied to an underlying layer and a second edge (64) of the one of the plurality of inner layers (18) is applied to the one of the plurality of inner layers (18) over the first edge (62) and overlaps the first edge (62), and wherein the raised protective strip (12) is formed in a raised portion of the outermost layer (24) that overlies the overlap seam (60).

8. A tube (10) for winding a web of fabric or other material thereon, comprising:
an inner tube (16) comprising a plurality of inner layers (18) that are wound one upon another about a longitudinal axis (20) of the inner tube (16) and adhered together, the inner tube (16) having a cylindrical inner tube outer surface (22);
an outermost layer (24) formed by a strip (26) of material that is helically wound around the inner tube outer surface (22), wherein the outermost layer (24) has a tube outer surface (14) and a plurality of raised gripping portions (28) extending radially outward from the tube outer surface (14) by a raised gripping portion distance (d_{GP}), **characterized in that** an overlap seam (50, 60) is formed by one of the plurality of inner layers (18) or the outermost layer (24) with a first edge (40, 62) of the one of the plurality of inner layers (18) or the outermost layer (24) being applied to an underlying layer and a second edge (42, 64) of the one of the plurality of inner layers (18) or the outermost layer (24) being applied to the one of the plurality of inner layers (18) or the outermost layer (24) over the first edge (40, 62) and overlapping the first edge (40, 62); and
a raised protective strip (12) formed in a portion of the outermost layer (24) that overlies the overlap seam (50, 60), wherein the raised protective strip (12) extends radially outward from the tube outer surface (14) by a protective strip distance (d_{PS}).

9. The tube (10) according to claim 8, wherein the overlap seam (50) is formed by the outermost layer (24).

10. The tube (10) according to claim 8, wherein the overlap seam (60) is formed by an outermost layer of the plurality of inner layers (18).

11. The tube (10) according to claim 8, wherein the plurality of raised gripping portions (28) comprises a plurality of embossments (30) formed in the outermost layer (24).

12. The tube (10) according to claim 8, wherein the plurality of raised gripping portions (28) comprises a plurality of perforations (32) formed in the outermost layer (24).

13. The tube (10) according to claim 8, wherein the raised gripping portion distance (d_{GP}) is greater than the protective strip distance (d_{PS}).

14. The tube (10) according to claim 8, wherein the raised gripping portion distance (d_{GP}) is within a range from 0.013 inch to 0.022 inch (0.330 mm to 0.559 mm).

15. A method for forming a tube (10) for winding a web of fabric or similar material thereon, comprising:
forming an inner tube (16) having a plurality of inner layers (18) that are wound one upon another about a longitudinal axis (20) of the inner tube (16) and adhered together, the inner tube (16) having a cylindrical inner tube outer surface (22);
forming an outermost layer (24) from a strip (12) of material that is helically wound around the inner tube outer surface (22), wherein the outermost layer (24) has a tube outer surface (14) and a plurality of raised gripping portions (28) extending radially outward from the tube outer surface (14) by a raised gripping portion distance (d_{GP}), **characterized by**
forming a raised protective strip (12) at the outermost layer (24) that helically wraps around the outermost layer (24) such that at least a portion of the plurality of raised gripping portions (28) are uncovered and exposed to an exterior of the tube (10), wherein the raised protective strip (12) extends radially outward from the tube outer surface (14) by a protective strip distance (d_{PS}).

16. The method according to claim 15, wherein forming the raised protective strip (12) comprises helically winding a strip (34) of material around the outermost layer (24) and affixing the raised protective strip (12) to the tube outer surface (14).

17. The method according to claim 15, wherein forming the raised protective strip (12) comprises forming an overlap seam (50) of the outermost layer (24) where a first edge (40) of the outermost layer (24) is applied to the inner tube outer surface (22) and a second edge (42) of the outermost layer (24) is applied to the tube outer surface (14) over the first edge (40) and overlaps the first edge (40).

18. The method according to claim 15, wherein forming the raised protective strip (12) comprises forming an overlap seam (60) in one of the plurality of inner layers (18) of the inner tube (16) where a first edge (62) of the one of the plurality of inner layers (18) is applied to an underlying layer and a second edge (64) of the one of the plurality of inner layers (18) is applied to the one of the plurality of inner layers (18) over the first edge (62) and overlaps the first edge (62), and wherein the raised protective strip (12) is formed in a raised portion of the outermost layer (24) that overlies the overlap seam (60).

19. The method according to claim 15, comprising embossing the strip (12) of material to form the plurality of raised gripping portions (28).

20. The method according to claim 15, comprising perforating the strip (12) of material to form the plurality of raised gripping portions (28).

## Patentansprüche

1. Rolle (10) zum Aufwickeln einer Bahn aus Gewebe oder ähnlichem Material, umfassend:
eine Innenrolle (16), die eine Vielzahl von Innenschichten (18) umfasst, die um eine Längsachse (20) der Innenrolle (16) übereinander gewickelt und miteinander verklebt sind, wobei die Innenrolle (16) eine zylindrische Außenfläche (22) aufweist;
eine äußerste Schicht (24), die durch einen Materialstreifen (26) gebildet ist, der spiralförmig um die Außenfläche (22) der Innenrolle gewickelt ist, wobei die äußerste Schicht (24) eine Außenfläche (14) der Rolle und eine Vielzahl von erhabenen Griffabschnitten (28) aufweist, die sich um einen Abstand (dGP) der erhabenen Griffabschnitte radial nach außen von der Außenfläche (14) der Rolle erstrecken, **gekennzeichnet durch**
einen erhabenen Schutzstreifen (12), der an der äußersten Schicht (24) ausgebildet ist und die äußerste Schicht (24) so umhüllt, dass zumindest ein Teil der Vielzahl von erhabenen Griffabschnitten (28) unbedeckt und zur Außenseite der Rolle (10) hin freigelegt ist, und wobei sich der erhabene Schutzstreifen (12) um einen Schutzstreifenabstand (dPS) radial nach außen von der Außenfläche (14) der Rolle erstreckt.

2. Rolle (10) nach Anspruch 1, wobei die Vielzahl erhabener Griffabschnitte (28) eine Vielzahl von Prägungen (30) umfasst, die in der äußersten Schicht (24) ausgebildet sind.

3. Rolle (10) nach Anspruch 1, wobei der Abstand (dGP) der erhabenen Griffabschnitte kleiner ist als der Schutzstreifenabstand (dPS).

4. Rolle (10) nach Anspruch 1, wobei der erhabene Schutzstreifen (12) einen Materialstreifen (34) umfasst, der spiralförmig um die äußerste Schicht (24) gewickelt und an der Rollenaußenfläche (14) befestigt ist.

5. Rolle (10) nach Anspruch 4, wobei der erhabene Schutzstreifen (12) auf einen Bereich der Rollenaußenfläche (14) aufgebracht ist, ohne einen der mehreren erhabenen Griffabschnitte (28) zu bedecken.

6. Rolle (10) nach Anspruch 1, wobei der erhabene Schutzstreifen (12) eine Überlappungsnaht (50) der äußersten Schicht (24) umfasst, bei der eine erste Kante (40) der äußersten Schicht (24) auf die innere Rollenaußenfläche (22) aufgebracht ist und eine zweite Kante (42) der äußersten Schicht (24) auf die Außenfläche (14) der Rolle über der ersten Kante (40) aufgebracht ist und die erste Kante (40) überlappt.

7. Rolle (10) nach Anspruch 1, wobei eine Überlappungsnaht (60) durch eine der mehreren Innenschichten (18) der Innenrolle (16) gebildet wird, wobei eine erste Kante (62) der einen der mehreren Innenschichten (18) auf eine darunterliegende Schicht aufgebracht ist und eine zweite Kante (64) der einen der mehreren Innenschichten (18) auf die eine der mehreren Innenschichten (18) über die erste Kante (62) aufgebracht wird und die erste Kante (62) überlappt, und wobei der erhabene Schutzstreifen (12) in einem erhabenen Abschnitt der äußersten Schicht (24) ausgebildet ist, die die Überlappungsnaht (60) überlagert.

8. Rolle (10) zum Aufwickeln einer Stoffbahn oder eines anderen Materials, umfassend:
eine Innenrolle (16), die mehrere Innenschichten (18) umfasst, die um eine Längsachse (20) der Innenrolle (16) übereinander gewickelt und miteinander verklebt sind, wobei die Innenrolle (16) eine zylindrische Außenfläche (22) aufweist;
eine äußerste Schicht (24), die aus einem Materialstreifen (26) gebildet ist, der spiralförmig um die Außenfläche (22) der Innenrolle gewickelt ist, wobei die äußerste Schicht (24) eine Außenfläche (14) der Rolle und eine Vielzahl von erhabenen Greifabschnitten (28) aufweist, die sich um einen Abstand (dGP) der erhabenen Greifabschnitte radial nach außen von der Außenfläche (14) der Rolle erstrecken, **dadurch gekennzeichnet, dass** eine Überlappungsnaht (50, 60) durch eine der mehreren Innenschichten (18) oder die äußerste Schicht (24) gebildet wird, wobei eine erste Kante (40, 62) der einen der mehreren Innenschichten (18) oder der äußersten Schicht (24) auf eine darunterliegende Schicht aufgebracht wird und eine zweite Kante (42, 64) der einen der mehreren inneren Schichten (18) oder der äußersten Schicht (24) auf die eine der mehreren inneren Schichten (18) oder die äußerste Schicht (24) über die erste Kante (40, 62) aufgebracht ist und die erste Kante (40, 62) überlappt; und
ein erhabener Schutzstreifen (12), der in einem Abschnitt der äußersten Schicht (24) ausgebildet ist, der die Überlappungsnaht (50, 60) überlagert, wobei sich der erhabene Schutzstreifen (12) um einen Schutzstreifenabstand (dPS) radial nach außen von der Rollenaußenfläche (14) erstreckt.

9. Rolle (10) nach Anspruch 8, wobei die Überlappungsnaht (50) durch die äußerste Schicht (24) gebildet wird.

10. Rolle (10) nach Anspruch 8, wobei die Überlappungsnaht (60) durch eine äußerste Schicht der mehreren inneren Schichten (18) gebildet wird.

11. Rolle (10) nach Anspruch 8, wobei die Vielzahl von erhabenen Griffabschnitten (28) eine Vielzahl von Prägungen (30) umfasst, die in der äußersten Schicht (24) ausgebildet sind.

12. Rolle (10) nach Anspruch 8, wobei die Vielzahl von erhabenen Griffabschnitten (28) eine Vielzahl von Perforationen (32) umfasst, die in der äußersten Schicht (24) ausgebildet sind.

13. Rolle (10) nach Anspruch 8, wobei der Abstand der erhabenen Griffabschnitte (dGP) größer ist als der Abstand der Schutzstreifen (dPS).

14. Rolle (10) nach Anspruch 8, wobei der Abstand der erhabenen Griffabschnitte (dGP) in einem Bereich von 0,330 mm bis 0,559 mm (0,013 Zoll bis 0,022 Zoll) liegt.

15. Verfahren zum Herstellen einer Rolle (10) zum Aufwickeln einer Bahn aus Gewebe oder ähnlichem Material darauf, umfassend:
Herstellen einer Innenrolle (16) mit einer Vielzahl von Innenschichten (18), die um eine Längsachse (20) der Innenrolle (16) übereinander gewickelt und miteinander verklebt sind, wobei die Innenrolle (16) eine zylindrische Außenseite (22) aufweist;
Bilden einer äußersten Schicht (24) aus einem Materialstreifen (12), der spiralförmig um die Außenfläche der Innenrolle (22) gewickelt ist, wobei die äußerste Schicht (24) eine Rollenaußenfläche (14) und eine Vielzahl von erhabenen Griffabschnitten (28) aufweist, die sich von der Rollenaußenfläche (14) um einen erhabenen Griffabschnittsabstand (dGP) radial nach außen erstrecken, **gekennzeichnet durch**
Ausbilden eines erhabenen Schutzstreifens (12) an der äußersten Schicht (24), der sich spiralförmig um die äußerste Schicht (24) wickelt, so dass mindestens ein Teil der Vielzahl von erhabenen Griffabschnitten (28) freigelegt und zur Außenseite der Rolle (10) hin offenliegt, wobei sich der erhabene Schutzstreifen (12) um einen Schutzstreifenabstand (dPS) radial nach außen von der Rollenaußenfläche (14) erstreckt.

16. Verfahren nach Anspruch 15, wobei das Ausbilden des erhabenen Schutzstreifens (12) das spiralförmige Wickeln eines Materialstreifens (34) um die äußerste Schicht (24) und das Befestigen des erhabenen Schutzstreifens (12) an der Außenfläche (14) der Rolle umfasst.

17. Verfahren nach Anspruch 15, wobei das Bilden des erhabenen Schutzstreifens (12) das Bilden einer Überlappungsnaht (50) der äußersten Schicht (24) umfasst, wobei eine erste Kante (40) der äußersten Schicht (24) auf die Außenfläche der Innenrolle (22) aufgebracht wird und eine zweite Kante (42) der äußersten Schicht (24) auf die Außenfläche (14) der Rolle über der ersten Kante (40) aufgebracht wird und die erste Kante (40) überlappt.

18. Verfahren nach Anspruch 15, wobei das Bilden des erhabenen Schutzstreifens (12) das Bilden einer Überlappungsnaht (60) in einer der mehreren Innenschichten (18) der Innenrolle (16) umfasst, wobei eine erste Kante (62) der einen der mehreren Innenschichten (18) auf eine darunterliegende Schicht aufgebracht wird und eine zweite Kante (64) der einen der mehreren Innenschichten (18) auf die eine der mehreren Innenschichten (18) über die erste Kante (62) aufgebracht wird und die erste Kante (62) überlappt, und wobei der erhabene Schutzstreifen (12) in einem erhabenen Abschnitt der äußersten Schicht (24) gebildet wird, die die Überlappungsnaht (60) überlagert.

19. Verfahren nach Anspruch 15, wobei der Materialstreifen (12) geprägt wird, um die mehreren erhabenen Griffabschnitte (28) zu bilden.

20. Verfahren nach Anspruch 15, wobei der Materialstreifen (12) perforiert wird, um die mehreren erhabenen Griffabschnitte (28) zu bilden.

## Revendications

1. - Tube (10) pour enrouler une bande de tissu ou de matériau similaire sur celui-ci, comprenant :
un tube interne (16) comprenant une pluralité de couches internes (18) qui sont enroulées les unes sur les autres autour d'un axe longitudinal (20) du tube interne (16) et collées ensemble, le tube interne (16) ayant une surface externe de tube interne cylindrique (22) ;
une couche la plus à l'extérieur (24) formée par une bande (26) de matériau qui est enroulée de manière hélicoïdale autour de la surface externe de tube interne (22), la couche la plus à l'extérieur (24) ayant une surface externe de tube (14) et une pluralité de parties de préhension surélevées (28) s'étendant radialement vers l'extérieur à partir de la surface externe de tube (14) d'une distance de partie de préhension surélevée (d_{GP}) ;
**caractérisé par**
une bande de protection surélevée (12) formée à la couche la plus à l'extérieur (24) et s'enroulant autour de la couche la plus à l'extérieur (24) de telle sorte qu'au moins une partie de la pluralité de parties de préhension surélevées (28) soit découverte et exposée à un extérieur du tube (10), et la bande de protection surélevée (12) s'étendant radialement vers l'extérieur à partir de la surface externe de tube (14) d'une distance de bande de protection (d_{PS}).

2. - Tube (10) selon la revendication 1, dans lequel la pluralité de parties de préhension surélevées (28) comprend une pluralité de bossages (30) formés dans la couche la plus à l'extérieur (24).

3. - Tube (10) selon la revendication 1, dans lequel la distance de partie de préhension surélevée (d_{GP}) est inférieure à la distance de bande de protection (d_{PS}).

4. - Tube (10) selon la revendication 1, dans lequel la bande de protection surélevée (12) comprend une bande (34) de matériau qui est enroulée de façon hélicoïdale autour de la couche la plus à l'extérieur (24) et fixée à la surface externe de tube (14).

5. - Tube (10) selon la revendication 4, dans lequel la bande de protection surélevée (12) est appliquée sur une zone de la surface externe de tube (14) sans recouvrir l'une quelconque de la pluralité de parties de préhension surélevées (28).

6. - Tube (10) selon la revendication 1, dans lequel la bande de protection surélevée (12) comprend un joint de recouvrement (50) de la couche la plus à l'extérieur (24) où un premier bord (40) de la couche la plus à l'extérieur (24) est appliqué à la surface externe de tube interne (22) et un second bord (42) de la couche la plus à l'extérieur (24) est appliqué à la surface externe de tube (14) sur le premier bord (40) et recouvre le premier bord (40).

7. - Tube (10) selon la revendication 1, dans lequel un joint de recouvrement (60) est formé par l'une de la pluralité de couches internes (18) du tube interne (16) où un premier bord (62) de ladite couche interne de la pluralité de couches internes (18) est appliqué à une couche sous-jacente et un second bord (64) de ladite couche interne de la pluralité de couches internes (18) est appliqué à ladite couche interne de la pluralité de couches internes (18) sur le premier bord (62) et recouvre le premier bord (62), et dans lequel la bande de protection surélevée (12) est formée dans une partie surélevée de la couche la plus à l'extérieur (24) qui recouvre le joint de recouvrement (60).

8. - Tube (10) pour enrouler une bande de tissu ou d'un autre matériau sur celui-ci, comprenant :
un tube interne (16) comprenant une pluralité de couches internes (18) qui sont enroulées les unes sur les autres autour d'un axe longitudinal (20) du tube intérieur (16) et collées ensemble, le tube interne (16) ayant une surface externe de tube interne cylindrique (22) ;
une couche la plus à l'extérieur (24) formée par une bande (26) de matériau qui est enroulé de façon hélicoïdale autour de la surface externe de tube interne (22), la couche la plus à l'extérieur (24) ayant une surface externe de tube (14) et une pluralité de parties de préhension surélevées (28) s'étendant radialement vers l'extérieur à partir de la surface externe de tube (14) d'une distance de partie de préhension surélevée (d_{GP}), **caractérisé par le fait qu'**un joint de recouvrement (50, 60) est formé par l'une de la pluralité de couches internes (18) ou la couche la plus à l'extérieur (24) avec un premier bord (40, 62) de ladite couche interne de la pluralité de couches internes (18) ou de la couche la plus à l'extérieur (24) qui est appliqué à une couche sous-jacente et un second bord (42, 64) de ladite couche interne de la pluralité de couches internes (18) ou de la couche la plus à l'extérieur (24) qui est appliqué à ladite couche interne de la pluralité de couches internes (18) ou à la couche la plus à l'extérieur (24) sur le premier bord (40, 62) et recouvrant le premier bord (40, 62) ; et
une bande de protection surélevée (12) formée dans une partie de la couche la plus à l'extérieur (24) qui recouvre le joint de recouvrement (50, 60), la bande de protection surélevée (12) s'étendant radialement vers l'extérieur à partir de la surface externe de tube (14) d'une distance de bande de protection (d_{PS}).

9. - Tube (10) selon la revendication 8, dans lequel le joint de recouvrement (50) est formé par la couche la plus à l'extérieur (24).

10. - Tube (10) selon la revendication 8, dans lequel le joint de recouvrement (60) est formé par une couche la plus à l'extérieur de la pluralité de couches internes (18).

11. - Tube (10) selon la revendication 8, dans lequel la pluralité de parties de préhension surélevées (28) comprend une pluralité de bossages (30) formés dans la couche la plus à l'extérieur (24).

12. - Tube (10) selon la revendication 8, dans lequel la pluralité de parties de préhension surélevées (28) comprend une pluralité de perforations (32) formées dans la couche la plus à l'extérieur (24).

13. - Tube (10) selon la revendication 8, dans lequel la distance de partie de préhension surélevée (d_{GP}) est supérieure à la distance de bande de protection (d_{PS}).

14. - Tube (10) selon la revendication 8, dans lequel la distance de partie de préhension surélevée (d_{GP}) est dans une plage de 0,013 pouce à 0,022 pouce (0,330 mm à 0,559 mm).

15. - Procédé de formation d'un tube (10) pour enrouler sur celui-ci une bande de tissu ou d'un matériau similaire, comprenant :
former un tube interne (16) ayant une pluralité de couches internes (18) qui sont enroulées les unes sur les autres autour d'un axe longitudinal (20) du tube interne (16) et collées ensemble, le tube interne (16) ayant une surface externe de tube interne cylindrique (22) ;
former une couche la plus à l'extérieur (24) à partir d'une bande (12) de matériau qui est enroulée de façon hélicoïdale autour de la surface externe de tube interne (22), la couche la plus à l'extérieur (24) ayant une surface externe de tube (14) et une pluralité de parties de préhension surélevées (28) s'étendant radialement vers l'extérieur à partir de la surface externe de tube (14) d'une distance de partie de préhension surélevée (d_{GP}), **caractérisé par**
former une bande de protection surélevée (12) sur la couche la plus à l'extérieur (24) qui s'enroule de façon hélicoïdale autour de la couche la plus à l'extérieur (24) de telle sorte qu'au moins une partie de la pluralité de parties de préhension surélevées (28) soit découverte et exposée à un extérieur du tube (10), la bande de protection surélevée (12) s'étendant radialement vers l'extérieur à partir de la surface externe de tube (14) d'une distance de bande de protection (d_{PS}) .

16. - Procédé selon la revendication 15, dans lequel la formation de la bande de protection surélevée (12) comprend l'enroulement hélicoïdal d'une bande (34) de matériau autour de la couche la plus à l'extérieur (24) et la fixation de la bande de protection surélevée (12) à la surface externe de tube (14).

17. - Procédé selon la revendication 15, dans lequel la formation de la bande de protection surélevée (12) comprend la formation d'un joint de recouvrement (50) de la couche la plus à l'extérieur (24) où un premier bord (40) de la couche la plus à l'extérieur (24) est appliqué à la surface externe de tube interne (22) et un second bord (42) de la couche la plus à l'extérieur (24) est appliqué à la surface externe de tube (14) sur le premier bord (40) et recouvre le premier bord (40).

18. - Procédé selon la revendication 15, dans lequel la formation de la bande de protection surélevée (12) comprend la formation d'un joint de recouvrement (60) dans l'une de la pluralité de couches internes (18) du tube interne (16) où un premier bord (62) de ladite couche interne de la pluralité de couches internes (18) est appliqué à une couche sous-jacente et un second bord (64) de ladite couche interne de la pluralité de couches internes (18) est appliqué à ladite couche interne de la pluralité de couches internes (18) sur le premier bord (62) et recouvre le premier bord (62), et dans lequel la bande de protection surélevée (12) est formée dans une partie surélevée de la couche la plus à l'extérieur (24) qui recouvre le joint de recouvrement (60).

19. - Procédé selon la revendication 15, comprenant le gaufrage de la bande (12) de matériau pour former la pluralité de parties de préhension surélevées (28).

20. - Procédé selon la revendication 15, comprenant la perforation de la bande (12) de matériau pour former la pluralité de parties de préhension surélevées (28).
